# EUROPÄISCHE PATENTSCHRIFT

(11) **EP 4 589 244 B1**
(45) Veröffentlichungstag und Bekanntmachung des Hinweises auf die Patenterteilung: **20.05.2026**
(21) Anmeldenummer: 25152749.5
(22) Anmeldetag: 20.01.2025
(51) Int. Cl.: G01B 5/00, G01B 11/27

(54) **AUSRICHTVORRICHTUNG FÜR EIN ZWEI- ODER DREIRADFAHRZEUG**
ALIGNMENT DEVICE FOR A TWO- OR THREE-WHEELED VEHICLE
DISPOSITIF D'ALIGNEMENT POUR VÉHICULE À DEUX OU TROIS ROUES

(30) Priorität: 22.01.2024 DE 102024101770
(43) Veröffentlichungstag der Anmeldung: 23.07.2025
(73) Patentinhaber: Karl A. Steinel GmbH, 08645 Bad Elster (DE)
(72) Erfinder: Bräunlich, Christian, 08626 Adorf (DE)
(74) Vertreter: Steiniger, Carmen

(56) Entgegenhaltungen:
- EP-A2- 0 491 369
- US-A1- 2014 375 993
- US-A1- 2015 323 315

## Beschreibung

Die vorliegende Erfindung betrifft eine Ausrichtvorrichtung für ein Zwei- oder Dreiradfahrzeug, wobei die Ausrichtvorrichtung einen Schwenkarm mit einem daran befestigten Laser und eine Fahrzeugkopplung aufweist.

Insbesondere im Radsport ist es sehr wichtig, dass sämtliche Teile eines Fahrrades, wie Räder, Bremsen und Sattel, exakt ausgerichtet sind. Speziell beim professionellen Radsport genügt es nicht, solche Teile mittels Augenmaß auszurichten. Daher sind aus dem Stand der Technik verschiedene Ausrichtvorrichtungen für Fahrräder bekannt.

Die beispielsweise in der Druckschrift US 2014/0375993 A1 beschriebene Ausrichtvorrichtung weist ein auf einem Fahrradlenker aufsetzbares Gerät mit Laser auf. Das Gerät hat zwei Arme, mit welchen das Gerät auf eine Fahrradlenkergabel aufbringbar ist. Fixiert wird das Gerät mittels eines Paares elastischer Bänder, die um jeweils einen Lenkerarm geführt werden. Durch einen Einstellknopf ist der Laser verdrehbar. Mit dem Laser kann beispielsweise ein Punkt auf ein Vorderrad oder auf den Fahrradsattel projiziert werden. Ist die Fahrradlenkergabel relativ zum Rahmen des Fahrrades ausgerichtet, kann ein Strahlwinkel des Lasers so eingestellt werden, dass andere Komponenten des Fahrrades, wie beispielsweise der Sattel, ausgerichtet werden können.

Die Druckschrift US 2012/0233833 A1 offenbart ein Verfahren zum Ausrichten verschiedener Fahrradkomponenten, wie Räder, Sattel, Getriebe oder Bremsen. Dabei soll das Vorderrad als auch der Sattel relativ zu dem Lenker eingestellt werden. Hierzu wird ein Ausrichtgerät auf dem Lenker des Fahrrades befestigt.

Die Druckschrift US 2015/323315 A1 beschreibt eine Ausrichtvorrichtung für ein Fahrrad mit einer Fahrzeugkopplung und einem Schwenkarm mit einem daran befestigten Laser.

Es ist die Aufgabe der vorliegenden Erfindung, eine Ausrichtvorrichtung für ein Zwei- oder Dreiradfahrzeug zur Verfügung zu stellen, welche eine einfache und exakte Ausrichtung von wenigstens einem Anbauteil des Zwei- oder Dreiradfahrzeuges, wie wenigstens eines Bremshebels oder Ganghebels, ermöglicht.

Die Aufgabe wird durch eine Ausrichtvorrichtung für ein Zwei- oder Dreiradfahrzeug gelöst, wobei die Ausrichtvorrichtung einen Schwenkarm mit einem daran befestigten Laser und eine Fahrzeugkopplung aufweist, wobei die Fahrzeugkopplung eine fest mit dem Zwei- oder Dreiradfahrzeug verbindbare Drehlagervorrichtung aufweist, wobei der Schwenkarm mit der Drehlagervorrichtung gelenkig verbunden ist und an der gelenkigen Verbindung zwischen dem Schwenkarm und der Drehlagervorrichtung eine Feststelleinrichtung ausgebildet ist.

Die erfindungsgemäße Ausrichtvorrichtung ist speziell für Fahrräder geeignet, kann aber auch bei anderen Zwei- oder Dreiradfahrzeugen, wie Motorrädern oder Dreirädern, eingesetzt werden.

Die erfindungsgemäße Ausrichtvorrichtung dient dem exakten Ausrichten von Anbauteilen eines Zwei- oder Dreiradfahrzeuges, wobei vorliegend als Anbauteile Komponenten des Zwei- oder Dreiradfahrzeuges verstanden werden, die nicht Bestandteil des Rahmens oder Lenkers sind. Als Anbauteile im Sinne der vorliegenden Erfindung sind beispielsweise Bremshebel, Schalthebel, Drehgriffe oder ein Sattel anzusehen.

Speziell dient die erfindungsgemäße Ausrichtvorrichtung dem spiegelsymmetrischen Ausrichten von zweifach an einem Zwei- oder Dreiradfahrzeug vorgesehenen Komponenten, wie von zwei Bremshebeln oder zwei Schalthebeln.

Zum Ausrichten von Anbauteilen wird die erfindungsgemäße Ausrichtvorrichtung an dem Zwei- oder Dreiradfahrzeug, an dem die auszurichtenden Anbauteile vorgesehen sind, befestigt.

Die erfindungsgemäße Ausrichtvorrichtung weist hierzu eine Fahrzeugkopplung auf, mit der die Ausrichtvorrichtung fest an dem Zwei- oder Dreiradfahrzeug angebracht werden kann. Bevorzugt wird die erfindungsgemäße Ausrichtvorrichtung mittels der Fahrzeugkopplung an einem Fahrzeuggabelschaft des Zwei- oder Dreiradfahrzeuges befestigt.

Die Fahrzeugkopplung weist eine Drehlagervorrichtung auf, welche mit dem den Laser haltenden Schwenkarm verbunden ist. Der Schwenkarm kann durch die die Drehlagervorrichtung aufweisende Fahrzeugkopplung drehpunktfixiert und zugleich um eine Längsachse des Fahrzeuggabelschaftes rotierbar an dem Zwei- oder Dreiradfahrzeug angebracht werden. Hierdurch kann wenigstens ein Anbauteil des Zwei- oder Dreiradfahrzeuges besonders exakt und einfach ausgerichtet werden.

Der Schwenkarm ist gelenkig, also durch ein Drehgelenk, mit der Drehlagervorrichtung verbunden. Hierdurch ist der Schwenkarm nicht nur rotierbar, sondern auch in seiner Neigung verstellbar, wodurch er unterschiedlich im Raum ausgerichtet werden kann. Der an dem Schwenkarm angeordnete Laser kann durch die Schwenkbarkeit des Schwenkarmes besonders gut auf ein auszurichtendes Anbauteil des Zwei- oder Dreiradfahrzeuges ausgerichtet werden.

Um den auf das jeweilige Anbauteil ausgerichteten Schwenkarm in der jeweiligen Ausrichtposition fixieren zu können, ist an der gelenkigen Verbindung zwischen dem Schwenkarm und der Drehlagervorrichtung eine Feststelleinrichtung ausgebildet. Die Feststelleinrichtung ermöglicht es, die Verbindung zwischen dem Schwenkarm und der Drehlagervorrichtung zu lockern, sodass der Schwenkarm gegenüber der Fahrzeugkopplung verschwenkt und dadurch der Laser auf das jeweils auszurichtende Anbauteil ausgerichtet werden kann. Zudem kann durch Feststellen der Feststelleinrichtung die Position des Schwenkarmes gegenüber der Fahrzeugkopplung fixiert werden.

Im Folgenden soll die Funktion der erfindungsgemäßen Ausrichtvorrichtung bei deren Nutzung an einem Fahrrad zur Ausrichtung von zwei an einem Fahrradlenker des Fahrrades angebrachten Bremshebeln erläutert werden.

Die erfindungsgemäße Ausrichtvorrichtung wird zunächst mittels der Fahrzeugkopplung beispielsweise an einem Fahrzeuggabelschaft des Fahrrades befestigt. Die Fahrzeugkopplung hält die Ausrichtvorrichtung fest an dem Fahrrad. Die Drehlagervorrichtung der Fahrzeugkopplung bildet einen festen Drehpunkt aus, um den der Schwenkarm der Ausrichtvorrichtung verdrehbar ist. Dabei nutzt die Drehlagervorrichtung - je nach Ausführungsform - die Drehbarkeit des Kolbens in der Gleitlagerbuchse oder die Drehbarkeit der Gleitlagerbuchse auf dem Kolben. Entsprechend ist auch der an dem Schwenkarm gehaltene Laser mit dem Schwenkarm in unterschiedliche Raumrichtungen drehbar. Somit ist eine Rotation des Schwenkarmes und damit des an dem Schwenkarm angebrachten Lasers um den Fahrzeuggabelschaft möglich.

Zusätzlich ist der Schwenkarm an der Drehlagervorrichtung verschwenkbar, sodass der an dem Schwenkarm gehaltene Laser mit dem Schwenkarm in unterschiedliche Neigungen verschwenkbar ist.

Nach der Befestigung der erfindungsgemäßen Ausrichtvorrichtung an dem Fahrzeuggabelschaft wird der von dem Schwenkarm gehaltene Laser durch Rotieren und Schwenken des Schwenkarmes auf den ersten Bremshebel ausgerichtet.

Die Position des Schwenkarmes wird mit Hilfe der zwischen dem Schwenkarm und der Drehlagervorrichtung angebrachten Feststelleinrichtung fixiert.

Anschließend wird der Laser durch Rotieren des Schwenkarmes mittels der Drehlagervorrichtung bei ansonsten gleichbleibender Ausrichtung des Schwenkarmes zu dem zweiten Bremshebel zeigend ausgerichtet, sodass der zweite Bremshebel hinsichtlich seines Abstandes zu dem Fahrzeuggabelschaft und seiner Neigung an die Ausrichtung des ersten Bremshebels angepasst werden kann.

Es ist auch denkbar, dass die erfindungsgemäße Ausrichtvorrichtung zum symmetrischen Ausrichten von zwei an einem Fahrzeuglenker eines Zwei- oder Dreiradfahrzeuges, wie eines Fahrrades, angebrachten Schalthebeln oder Drehgriffen oder zum Ausrichten eines Fahrzeugsattels verwendet wird.

Zudem muss die erfindungsgemäße Ausrichtvorrichtung auch nicht an dem Fahrzeuggabelschaft eines Zwei- oder Dreiradfahrzeuges fixiert werden. Ebenso kann die erfindungsgemäße Ausrichtvorrichtung auch an einem anderen Rahmenteil des Zwei- oder Dreiradfahrzeuges angebracht sein bzw. werden.

In einer bevorzugten Ausführungsform der erfindungsgemäßen Ausrichtvorrichtung ist die Drehlagervorrichtung ein Gleitlager mit einer Gleitlagerbuchse und einem in die Gleitlagerbuchse passenden Kolben, wobei die Gleitlagerbuchse und der Kolben relativ zueinander verdrehbar sind. Alternativ kann die Drehlagervorrichtung auch als Kugellager oder in Form eines anderen lediglich eine Rotationsbewegung ermöglichenden Lagers ausgebildet sein.

Bevorzugt ist die Gleitlagerbuchse als Hohlzylinder ausgebildet, wobei der Kolben in seiner Form und Größe an den Hohlzylinder angepasst ist.

Je nach Ausführungsform der erfindungsgemäßen Ausrichtvorrichtung ist entweder die Gleitlagerbuchse oder der Kolben mit dem Zwei- oder Dreiradfahrzeug, bevorzugt mit dem Fahrzeuggabelschaft, verbindbar oder verbunden.

In Ausführungsformen, in denen die Gleitlagerbuchse fest mit dem Zwei- oder Dreiradfahrzeug verbindbar oder verbunden ist, ist der den Laser haltende Schwenkarm an dem Kolben der Fahrzeugkopplung angebracht. Ist die Fahrzeugkopplung derart ausgebildet, dass der Kolben mit dem Zwei- oder Dreiradfahrzeug verbindbar oder verbunden ist, ist der Schwenkarm mit der Gleitlagerbuchse verbunden. Der Schwenkarm ist somit rotierbar, wodurch ein von dem Laser ausgesandter Laserstrahl auf verschiedene Komponenten, wie die Bremshebel, des Zwei- oder Dreiradfahrzeuges ausrichtbar ist.

In einer vorteilhaften Ausführungsform der Erfindung weist der Schwenkarm einen Ausrichtarm und einen mit dem Ausrichtarm gelenkig verbundenen Laserhaltearm auf, wobei an der gelenkigen Verbindung zwischen dem Ausrichtarm und dem Laserhaltearm eine Feststelleinrichtung ausgebildet ist.

Durch die zweiteilige Ausbildung des Schwenkarmes aus dem Ausrichtarm und dem Laserhaltearm kann der an oder in dem Laserhaltearm angeordnete Laser gezielt auf die auszurichtenden Anbauteile ausgerichtet werden. Für eine optimale Positionierung des Lasers und zugleich eine gute Fixierung des Lasers in der gewünschten Position ist der Ausrichtarm durch ein Drehgelenk mit dem Laserhaltearm verbunden, wobei das Drehgelenk ein Verschwenken des Laserhaltearmes gegenüber dem Ausrichtarm ermöglicht. An dem Drehgelenk ist eine Feststelleinrichtung angebracht, mittels welcher eine gewünschte Stellung des Drehgelenkes, also eine gewünschte Stellung des Laserhaltearmes gegenüber dem Ausrichtarm, fixiert werden kann.

In alternativen Ausführungsformen der erfindungsgemäßen Ausrichtvorrichtung kann der Schwenkarm auch eine andere Anzahl an Gliedern aufweisen. Beispielsweise kann der Schwenkarm eingliedrig oder dreigliedrig ausgebildet sein. Bei einer dreigliedrigen Ausgestaltung des Schwenkarmes weist dieser vorteilhafterweise zwei Ausrichtarme und einen Laserhaltearm auf.

In einer bevorzugten Ausführungsform der erfindungsgemäßen Ausrichtvorrichtung sind der Laserhaltearm und der Schwenkarm zylinderförmig ausgebildet. An einem ersten Ende des Laserhaltearmes ist der Laser angeordnet. Ein zweites, dem ersten Ende gegenüberliegendes Ende des Laserhaltearmes ist mit einem ersten Ende des Ausrichtarmes verbunden. Der Ausrichtarm ist mit einem zweiten, dem ersten Ende gegenüberliegenden Ende mit der Fahrzeugkopplung gekoppelt.

In einer besonders praktischen Ausführungsform der erfindungsgemäßen Ausrichtvorrichtung weist die Gleitlagerbuchse oder der Kolben fahrzeugseitig ein Gewinde auf.

Für ein schnelles und lagefestes Anbringen der Fahrzeugkopplung an dem Zwei- oder Dreiradfahrzeug hat es sich als günstig erwiesen, wenn die Gleitlagerbuchse und der Kolben als separate, ineinander steckbare und wieder voneinander trennbare Komponenten ausgebildet sind.

Sind die Gleitlagerbuchse und der Kolben als separate Komponenten ausgebildet, weist die Gleitlagerbuchse, in Ausführungsformen, in denen die Gleitlagerbuchse mit dem Zwei- oder Dreiradfahrzeug verbindbar ausgebildet oder mit dem Zwei- oder Dreiradfahrzeug verbunden ist, das oben genannte Gewinde auf. In das Gewinde ist eine Befestigungsschraube einbringbar, mittels der die Gleitlagerbuchse vorzugsweise an dem Fahrzeuggabelschaft des Zwei- oder Dreiradfahrzeuges anschraubbar ist. Durch das Verschrauben der Gleitlagerbuchse mit dem Fahrzeuggabelschaft und Einstecken des mit dem Schwenkarm verbundenen Kolbens in die Gleitlagerbuchse kann die erfindungsgemäße Ausrichtvorrichtung einfach und positionsfest an dem Fahrzeugrahmen des Zwei- oder Dreiradfahrzeuges befestigt werden, wobei der Schwenkarm durch das Gleitlager rotierbar ist.

Besonders bevorzugt ist das Gewinde in einer Grundfläche der Gleitlagerbuchse, welche sich senkrecht zu einer Mantelfläche der Gleitlagerbuchse erstreckt, vorgesehen. Hierbei weist der die Gleitlagerbuchse ausbildende Hohlzylinder an einem mit dem Zwei- oder Dreiradfahrzeug zu koppelndem Endbereich einen im Vergleich zu einem den Kolben aufnehmenden Endbereich verkleinerten Innendurchmesser auf. Der Innendurchmesser ist an dem Endbereich, der mit dem Fahrzeug gekoppelt wird, an einen Schraubenschaftdurchmesser angepasst. Der an den Schraubenschaftdurchmesser angepasste Innendurchmesser weist das Gewinde auf, das der Befestigung der Gleitlagerbuchse an dem Fahrzeuggabelschaft dient.

In einer alternativen Ausführungsformen der erfindungsgemäßen Ausrichtvorrichtung ist der Kolben der Fahrzeugkopplung mit dem Zwei- oder Dreiradfahrzeug verbindbar oder verbunden. Hier weist der Kolben das Gewinde auf, mittels welchem der Kolben vorzugsweise mit dem Fahrzeuggabelschaft des Zwei- oder Dreiradfahrzeuges, speziell eines Fahrrades, verbindbar ist. Beispielsweise kann das Gewinde an einem fahrzeugseitigen Ende des Kolbens, mittig des Kolbens angeordnet sein, wobei der Kolben als Hohlzylinder ausgebildet ist. Die Ausgestaltung des Kolbens als Hohlzylinder ermöglicht ein Durchführen einer in das Gewinde des Kolbens einbringbaren Schraube durch den innen hohlen Kolben und damit ein Befestigen des Kolbens an dem Fahrzeuggabelschaft.

In einer alternativen Ausführungsform der erfindungsgemäßen Ausrichtvorrichtung wird die Fahrzeugkopplung nicht mittels eines an der Gleitlagerbuchse oder dem Kolben vorgesehenen Gewindes und einer in das Gewinde einbringbaren Schraube an dem Zwei- oder Dreiradfahrzeug befestigt, sondern mittels eines Spannelementes, welches vorzugsweise in eine Öffnung des Fahrzeuggabelschaftes gespannt wird.

Besonders bevorzugt ist hierzu fahrzeugseitig an dem Kolben oder der Gleitlagerbuchse eine Aufnahme ausgebildet, in die ein Spannelement mit spreizbaren Spannbacken eingreift.

In Ausführungsformen der erfindungsgemäßen Ausrichtvorrichtung, in denen der Kolben der Fahrzeugkopplung mit dem Zwei- oder Dreiradfahrzeug verbindbar ausgebildet oder verbunden ist, ist die Aufnahme an einem fahrzeugseitigen Ende des Kolbens angeordnet. Vorzugsweise ist die Aufnahme in Form eines Hohlzylinders ausgebildet. Ebenso kann die Aufnahme aber auch eine andere Form, wie beispielsweise eine innen hohle, mit einer Einführungsöffnung versehene Kugel- oder Halbkugelform, aufweisen. Prinzipiell kann die Aufnahme jede nur denkbare Form besitzen. Die Aufnahme soll jedoch eine Aufnahmeöffnung aufweisen und innen hohl ausgebildet sein, sodass das Spannelement oder zumindest ein Teil des Spannelementes in die Aufnahme einbringbar ist.

Ist die Aufnahme ein Hohlzylinder, ist das Spannelement vorzugsweise in Form eines Ringes mit auf dem Ring aufgebrachten, ringförmig angeordneten und aufspreizbaren Spannbacken ausgebildet. Zum Befestigen des Spannelementes an dem Zwei- oder Dreiradfahrzeug wird der die Spannbacken aufweisende Teil des Spannelementes in die Öffnung des Fahrzeuggabelschaftes eingesteckt. Anschließend wird eine zumindest teilweise konisch ausgebildete Schraube zwischen die ringförmig angeordneten Spannbacken eingeführt und mit dem Fahrzeuggabelschaft verschraubt. Durch das Einbringen der konisch ausgebildeten Schraube werden die Spannbacken auseinandergespreizt und das Spannelement an dem Fahrzeuggabelschaft befestigt.

Der Ring des Spannelementes, auf welchem die Spannbacken angeordnet sind, ist bei der Befestigung des Spannelementes an dem Fahrzeuggabelschaft derart angeordnet, dass dieser aus dem Fahrzeuggabelschaft herausragt, sodass der Ring in die an dem Kolben angebrachte Aufnahme eingebracht werden kann. Der die Aufnahme ausbildende Hohlzylinder ist derart ausgebildet, dass dieser eine formschlüssige Verbindung mit dem Ring des Spannelementes ausbildet. Der mit der Aufnahme verbundene Kolben ist dadurch positionsfest an dem Zwei- oder Dreiradfahrzeug anbringbar oder angebracht. Letztlich wird auf den Kolben die um den Kolben rotierbare mit dem Schwenkarm verbundene Gleitlagerbuchse aufgesetzt.

Für die Befestigung des Spannelementes an dem Fahrzeuggabelschaft hat es sich als besonders günstig herausgestellt, wenn das Spannelement drei jeweils ein Ringsegment ausbildende Spannbacken aufweist. Die Ringsegmente sind vorteilhafterweise so ausgebildet, dass ein Außendurchmesser und ein Innendurchmesser des sich durch die aneinanderliegenden Ringsegmente ergebenden Ringes einem Außendurchmesser und einem Innendurchmesser des die Spannbacken tragenden Ringes entsprechen.

In anderen Ausführungsformen der erfindungsgemäßen Ausrichtvorrichtung kann das Spannelement jedoch auch anders ausgebildet sein. Beispielsweise kann dieses mehr als drei, beispielweise vier, oder weniger als drei, beispielsweise zwei, Spannbacken aufweisen. Auch können die Spannbacken eine andere Form aufweisen. So können die Spannbacken beispielsweise im Wesentlichen quaderförmig ausgebildet sein.

Der Kolben und der die Aufnahme ausbildende Hohlzylinder sind vorzugsweise einstückig ausgebildet, wobei der Hohlzylinder einen größeren Außendurchmesser als der Kolben aufweist. Vorteilhafterweise besitzt der Hohlzylinder den gleichen Außendurchmesser wie die auf den Kolben aufbringbare Gleitlagerbuchse.

In einer anderen Ausführungsform der erfindungsgemäßen Ausrichtvorrichtung weist nicht der Kolben, sondern die Gleitlagerbuchse das Spannelement auf. Bei einer solchen Ausführungsform der erfindungsgemäßen Ausrichtvorrichtung ist die Gleitlagerbuchse fest mit Zwei- oder Dreiradfahrzeug, vorzugsweise dem Fahrzeuggabelschaft, verbindbar ausgebildet oder verbunden. Hierbei ist die Gleitlagerbuchse derart ausgebildet, dass diese in einem fahrzeugseitigen Ende eine Aufnahme für das Spannelement aufweist. Wie oben beschrieben, ist dann die an der Gleitlagerbuchse angeordnete Aufnahme vorzugsweise in Form eines Hohlzylinders ausgebildet, wobei das dazugehörige Spannelement die Form eines Ringes mit darauf aufgebrachten, ringförmig angeordneten Spannbacken aufweist. Hierzu zuvor gemachte Erläuterungen gelten auch für die die Aufnahme aufweisende Gleitlagerbuchse.

Als günstig hat es sich auch herausgestellt, wenn der Kolben einen Kragen aufweist, der auf die Gleitlagerbuchse aufsetzbar ist oder aufsitzt.

Als Kragen ist vorliegend ein Element zu verstehen, dass sich in Längsrichtung des Kolbens an den Kolben anschließt und sich in radialer Ausrichtung des Kolbens über den Kolben hinaus erstreckt. Vorzugsweise ist der Kragen als runde Scheibe ausgebildet. Ebenso kann der Kragen jedoch auch quaderförmig oder ringförmig ausgebildet sein oder eine andere Form aufweisen.

Es hat sich als günstig herausgestellt, wenn der Kolben einen Kragen aufweist, der auf die Gleitlagerbuchse aufsetzbar ist, sodass ein Hinein- oder Durchrutschen des Kolbens in/durch die Gleitlagerbuchse vermieden werden kann. Der Kragen ist vorzugsweise in Form eines an einem von der Gleitlagerbuchse wegweisenden Ende des Kolbens angebrachten Flansches ausgebildet.

Bevorzugt sind der Kolben und der Kragen einstückig ausgebildet. Vorteilhafterweise weist ein scheibenförmig ausgebildeter Kragen einen gleichen oder geringfügig größeren Außendurchmesser wie/als die Gleitlagerbuchse auf.

Hinsichtlich der Verbindung des Schwenkarmes mit der Drehlagervorrichtung und des Ausrichtarmes mit dem Laserhaltearm ist es von Vorteil, wenn die Fahrzeugkopplung an der gelenkigen Verbindung zwischen der Drehlagervorrichtung und dem Schwenkarm ein Verbindungselement aufweist, wobei entweder das Verbindungselement geschlitzt und der Schwenkarm beidseitig abgeflacht ist oder der Schwenkarm geschlitzt und das Verbindungselement beidseitig abgeflacht ist und/oder an der gelenkigen Verbindung zwischen dem Ausrichtarm und dem Laserhaltearm entweder der Ausrichtarm geschlitzt und der Laserhaltearm beidseitig abgeflacht ist oder der Laserhaltearm geschlitzt und der Ausrichtarm beidseitig abgeflacht ist.

Günstigerweise ist der Schwenkarm an einem Endbereich mit einem Verbindungselement der Fahrzeugkopplung, welches an der Drehlagervorrichtung angebracht ist, verbunden. Ist die Drehlagervorrichtung ein Gleitlager, ist das Verbindungselement, je nachdem ob der Kolben oder die Gleitlagerbuchse als positionsfest mit dem Zwei- oder Dreiradfahrzeug verbindbares oder verbundenes Element ausgebildet ist, mit dem Kolben oder der Gleitlagerbuchse verbunden. Weist der Kolben einen Kragen auf, ist das Verbindungselement vorzugsweise an dem Kragen des Kolbens angebracht.

Bevorzugt ist das Verbindungselement zylinderförmig ausgebildet. Für eine vorteilhafte Verbindung des Schwenkarmes mit dem Verbindungselement sind ein Endbereich des Schwenkarmes und ein Endbereich des Verbindungselementes komplementär zueinander, entweder geschlitzt oder abgeflacht ausgebildet. Durch Einbringen des beidseitig abgeflachten Endbereiches des Schwenkarmes oder Verbindungselementes in den geschlitzten Endbereich des Schwenkarmes oder Verbindungselementes ist der Schwenkarm einfach an das Verbindungselement der Fahrzeugkopplung ansteckbar. Der abgeflachte Endbereich des Schwenkarmes oder Verbindungselementes ist in seiner Form und Größe an den geschlitzten Endbereich des Schwenkarmes oder Verbindungselementes angepasst. Der Schlitz ist vorzugsweise mittig in den Schwenkarm oder mittig in dem Verbindungselement eingebracht.

Vorzugsweise sind auch miteinander zu verbindende Endbereiche des Laserhaltearmes und des Ausrichtarmes beidseitig abgeflacht oder geschlitzt ausgebildet, wodurch der Laserhaltearm einfach mit dem Ausrichtarm verbunden werden kann. Beispielsweise sind der Laserhaltearm und der Ausrichtarm hierbei zylinderförmig ausgestaltet.

In anderen Ausführungsformen der erfindungsgemäßen Ausrichtvorrichtung können die Endbereiche des zylinderförmig ausgestalteten Laserhaltearmes und Ausrichtarmes nicht beidseitig abgeflacht oder geschlitzt ausgebildet sein, sondern die Endbereiche jeweils nur einseitig abgeflacht ausgebildet sein. Die einseitig vorgesehenen Abflachungen sind dann derart angeordnet, dass diese im miteinander verbundenen Zustand von Ausrichtarm und Laserhaltearm aneinandergrenzen. Ebenso ist es auch möglich, dass das Verbindungselement der Fahrzeugkopplung und der mit dem Verbindungselement zu verbindende Endbereich des Schwenkarmes jeweils eine einseitig angebrachte Abflachung aufweisen, welche im verbundenen Zustand von Schwenkarm und Verbindungselement aneinanderliegen.

Weitere Ausführungsformen der erfindungsgemäßen Ausrichtvorrichtung können auch ohne Verbindungselement an der Fahrzeugkopplung ausgebildet sein.

Hinsichtlich der Befestigung des Lasers an dem Schwenkarm hat es sich als besonders geeignet herausgestellt, wenn der Schwenkarm an seinem freien Ende einen in eine Aufnahmeöffnung für den Laser mündenden Einführhilfeschlitz aufweist. Die AufnahmeÖffnung ist derart ausgebildet, dass der Laser in die Aufnahmeöffnung einbringbar ist. Durch den sich von einem freien Ende des Schwenkarmes zu der Aufnahmeöffnung erstreckenden Einführschlitz ist die Aufnahmeöffnung aufspreizbar, wodurch der Laser einfach in die Aufnahmeöffnung einsteckbar ist.

Wenn der Schwenkarm einen Ausrichtarm und einen Laserhaltearm aufweist, ist die den Laser aufnehmende Aufnahmeöffnung in einem freien Ende des Laserhaltearmes eingebracht.

Um den Laser in der Aufnahmeöffnung fixieren zu können, ist es von Vorteil, wenn an dem Einführhilfeschlitz eine Feststelleinrichtung ausgebildet ist. Durch die Feststelleinrichtung ist der Einführschlitz und damit die Aufnahmeöffnung, in welche der Einführschlitz mündet, nach dem Einbringen des Lasers in die Aufnahmeöffnung fixierbar, sodass ein Herausrutschen des Lasers aus der Aufnahmeöffnung vermieden werden kann.

Für eine stabile Fixierung des Schwenkarmes bzw. des Ausrichtarmes und des Laserhaltearmes kann die jeweilige Feststelleinrichtung beispielsweise eine Feststellschraube aufweisen.

Vorteilhafterweise ist die jeweilige Feststellschraube durch eine Durchgangsöffnung geführt, die in der gelenkigen Verbindung zwischen dem Laserhaltearm und dem Ausrichtarm, in der gelenkigen Verbindung zwischen dem Schwenkarm und der Fahrzeugkopplung oder senkrecht durch den Einführschlitz verlaufend angeordnet ist. Bevorzugt ist die Feststellschraube mit einer Schraubenmutter fixierbar. Das Vorsehen der Feststellschraube mit Schraubenmutter ermöglicht zum einen, dass der Schwenkarm gegenüber der Fahrzeugkopplung und der Laserhaltearm gegenüber dem Ausrichtarm im gelockerten Zustand der Feststellschraube verschwenkbar sind. Des Weiteren kann die Position des Schwenkarmes gegenüber der Fahrzeugkopplung sowie die Position des Laserhaltearmes gegenüber dem Ausrichtarm durch die Feststellschraube fixiert werden, wodurch ein exaktes Ausrichten von Anbauteilen an dem Zwei- oder Dreiradfahrzeug möglich ist.

Darüber hinaus ist auch eine Breite des Einführschlitzes und damit auch ein Durchmesser der mit dem Einführschlitz verbundenen Aufnahmeöffnung durch die Feststellschraube einstellbar, wodurch der in die Aufnahmeöffnung eingebrachte oder einbringbare Laser sicher in der Aufnahmeöffnung gehalten werden kann und zudem einfach in die Aufnahmeöffnung einbringbar ist bzw. wieder aus der Aufnahmeöffnung entnehmbar ist.

Hinsichtlich des Einbringens einer im Wesentlichen senkrecht zu dem Einführhilfeschlitz verlaufenden Durchgangsöffnung in den freien Endbereich des Schwenkarmes und der Befestigung der Feststellschraube in dieser Durchgangsöffnung ist es von Vorteil, wenn auch der freie Endbereich des Schwenkarmes, in dem der Einführschlitz eingebracht ist, beidseitig abgeflacht ist. Die Abflachungen verlaufen hierbei parallel zu dem Einführschlitz.

Bevorzugt wird als Feststellschraube eine Sternkopfschraube verwendet.

In alternativen Ausführungsformen der erfindungsgemäßen Ausrichtvorrichtung kann anstatt einer Feststellschraube auch ein Schnellspanner oder ein anderer Spann- oder Schraubmechanismus verwendet werden.

Bevorzugte Ausführungsformen der vorliegenden Erfindung, deren Aufbau, Funktion und Vorteile werden im Folgenden anhand von Figuren näher erläutert, wobei
- Figur 1: schematisch eine Ausführungsform einer erfindungsgemäßen Ausrichtvorrichtung in einer perspektivischen Ansicht von schräg oben zeigt;
- Figur 2: schematisch die Ausrichtvorrichtung aus Figur 1 ohne Gleitlagerbuchse in einer perspektivischen Ansicht von schräg oben zeigt;
- Figur 3: schematisch eine Gleitlagerbuchse der Ausrichtvorrichtung aus Figur 1 in einer perspektivischen Ansicht von schräg oben zeigt;
- Figur 4: schematisch die Gleitlagerbuchse aus Figur 3 in einer Draufsicht zeigt;
- Figur 5: schematisch die Ausrichtvorrichtung aus Figur 1 mit auf einen Kolben aufgesteckter Gleitlagerbuchse in einer perspektivischen Ansicht von schräg oben zeigt;
- Figur 6: schematisch die Ausrichtvorrichtung der Figuren 1 und 5 in einer Seitenansicht von rechts zeigt;
- Figur 7: schematisch die Ausrichtvorrichtung der Figuren 1, 5 und 6 in einer Seitenansicht von links zeigt;
- Figur 8: schematisch die Ausrichtvorrichtung der Figuren 1 und 5 bis 7 in einer Vorderansicht zeigt;
- Figur 9: schematisch ein Fahrrad mit der Ausrichtvorrichtung der Figuren 1 und 5 bis 8 in einer perspektivischen Ansicht zeigt;
- Figur 10: schematisch eine weitere Ausführungsform einer erfindungsgemäßen Ausrichtvorrichtung in einer perspektivischen Ansicht von schräg unten zeigt;
- Figur 11: schematisch die Ausrichtvorrichtung der Figur 10 in einer perspektivischen Ansicht von schräg oben zeigt; und
- Figur 12: schematisch die Ausrichtvorrichtung der Figuren 10 und 11 in einer Seitenansicht zeigt.

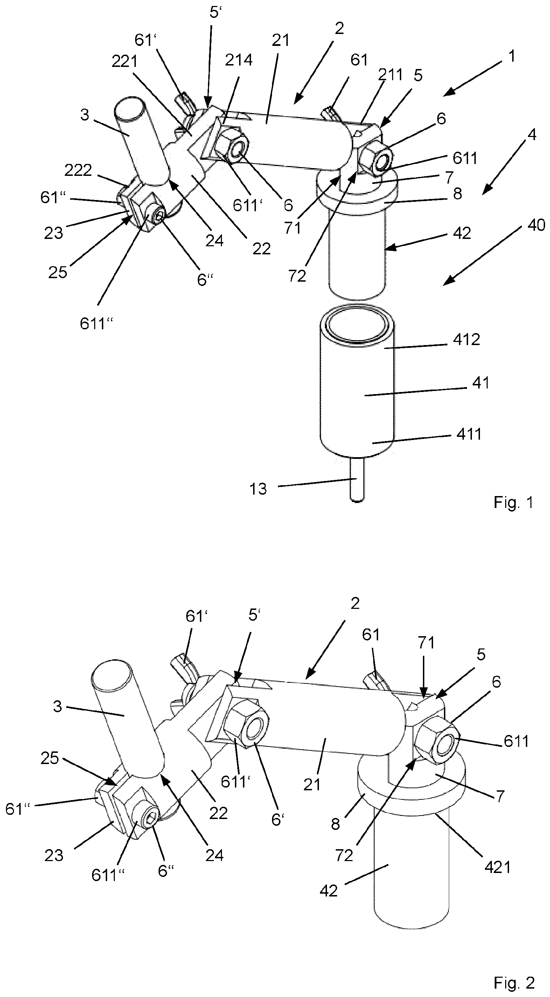

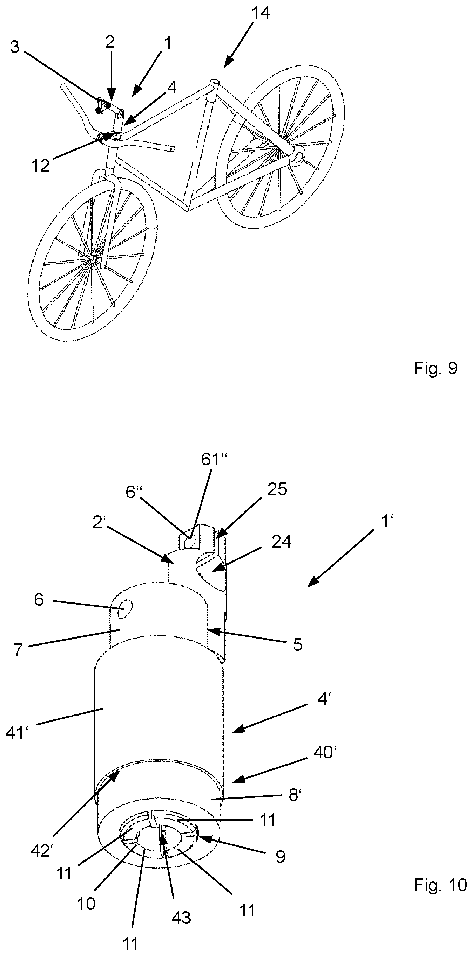

Die Figuren 1 sowie 5 bis 8 zeigen eine erste Ausführungsform einer erfindungsgemäßen Ausrichtvorrichtung 1 in unterschiedlichen Perspektiven. Die Ausrichtvorrichtung 1 weist eine Fahrzeugkopplung 4, welche dem Anbringen der Ausrichtvorrichtung 1 an einem beispielsweise in Figur 9 gezeigten Zwei- oder Dreiradfahrzeug dient, und einen Schwenkarm 2 mit einem Laser 3 auf.

Die Fahrzeugkopplung 4 weist eine Drehlagervorrichtung 40 auf. Die Drehlagervorrichtung 40 besteht in der in den Figuren 1 sowie 5 bis 8 gezeigten Ausführungsform aus einer mit dem Zwei- oder Dreiradfahrzeug verbindbaren Gleitlagerbuchse 41 und einem in die Gleitlagerbuchse 41 einbringbaren oder eingebrachten und mit dem Schwenkarm 2 verbundenen Kolben 42.

Die Figur 2 zeigt die Ausrichtvorrichtung 1 aus Figur 1 ohne die Gleitlagerbuchse 41 und gibt damit einen Zustand wieder, in dem der Kolben 42 noch nicht in die Gleitlagerbuchse 42 eingesetzt ist.

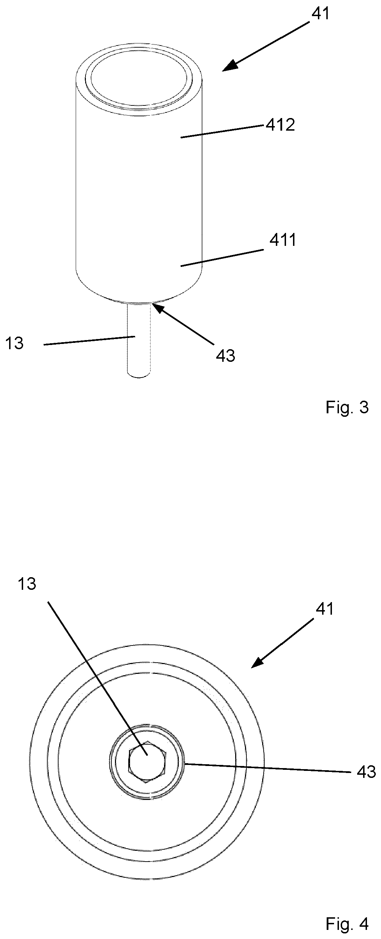

Die Gleitlagerbuchse 41 ist in Figur 3 schematisch in einer perspektivischen Ansicht von schräg oben gezeigt. Figur 4 zeigt die Gleitlagerbuchse 41 von Figur 3 in einer Draufsicht.

Die Gleitlagerbuchse 41 ist als Hohlzylinder ausgebildet, welcher an seinem zu dem Zwei- oder Dreiradfahrzeug zeigenden Endbereich 411 ein Gewinde 43 aufweist. Das Gewinde 43 ist als Innengewinde ausgebildet. Durch das Gewinde 43 kann die Gleitlagerbuchse 41 beispielsweise an einem Fahrzeuggabelschaft 12 des Zwei- oder Dreiradfahrzeuges, wie z.B. dem in Figur 9 gezeigten Fahrrad 14, befestigt werden.

Im Bereich des Gewindes 43 weist die Gleitlagerbuchse 41 im Vergleich zu einem den Kolben 42 aufnehmenden Bereich 412 verkleinerten Innendurchmesser auf. Der Innendurchmesser im Bereich des Gewindes 43 ist auf das Maß eines Schraubenschaftdurchmessers einer in das Gewinde 43 einbringbaren Schraube 13 reduziert.

Mittels der in das Gewinde 43 einbringbaren Schraube 13 kann die Gleitlagerbuchse 41 beispielsweise an den Fahrzeuggabelschaft 12 des Zwei- oder Dreiradfahrzeuges angeschraubt werden. Die Gleitlagerbuchse 41 ist durch das Anschrauben an dem Fahrzeuggabelschaft 12 positionsfest an dem Zwei- oder Dreiradfahrzeug befestigt.

Der in die Gleitlagerbuchse 41 einbringbare Kolben 42, welcher mit dem Schwenkarm 2 verbunden ist, ist schematisch in Figur 2 gezeigt.

Wie die Gleitlagerbuchse 41 ist auch der Kolben 42 Teil der als Drehlagervorrichtung 40 ausgebildeten Fahrzeugkopplung 4. Um eine Rotationsbewegung des Kolbens 42 um seine eigene Achse A zu ermöglichen, ist der Kolben 42 zylinderförmig ausgebildet und in seinen Abmessungen an die Abmessungen der als Hohlzylinder ausgebildeten Gleitlagerbuchse 41 angepasst.

Der Kolben 42 und die Gleitlagerbuchse 41 sind getrennt voneinander ausgebildete Komponenten, die durch Einstecken des Kolbens 42 in die Gleitlagerbuchse 41 miteinander verbindbar sind und durch Herausziehen des Kolbens 42 aus der Gleitlagerbuchse 41 voneinander trennbar sind. Die getrennte Ausbildung des Kolbens 42 und der Gleitlagerbuches 41 voneinander ermöglicht es, dass die Gleitlagerbuchse 41 separat von den anderen Teilen der Ausrichtvorrichtung 1 an dem Fahrzeuggabelschaft 12 befestigt werden kann.

In den Figuren 1 sowie 5 bis 8 ist der Kolben 42 in die Gleitlagerbuchse 41 eingesteckt. Der Kolben 42 wird hierbei von der Gleitlagerbuchse 41 seitlich umschlossen.

In der in den Figuren 1 sowie 5 bis 8 gezeigten Ausrichtvorrichtung 1 weist der Kolben 42, wie es besonders gut in den Figuren 1 und 2 zu erkennen ist, einen Kragen 8 auf. Der Kragen 8 ist an einem von dem Zwei- oder Dreiradfahrzeug wegzeigenden Ende 421 des Kolbens 42 angebracht. Der Kragen 8 ist bei der Ausrichtvorrichtung 1 scheibenförmig ausgebildet. Der scheibenförmige Kragen 8 weist im Vergleich zu dem Kolben 42 einen größeren Außendurchmesser auf. Der Kragen 8 ragt damit in radialer Ausrichtung des Kolbens 42 über den Kolben 42 hinaus, wodurch der Kragen 8 dann, wenn der Kolben 42 in die Gleitlagerbuchse 41 eingebracht ist, auf der Gleitlagerbuchse 41 aufsitzt. Durch den Kragen 8 wird der Kolben 42 an einem vollständigen Hineinrutschen in die Gleitlagerbuchse 41 gehindert.

Der Kragen 8 weist vorzugsweise den gleichen oder einen geringfügig größeren Außendurchmesser wie/als die Gleitlagerbuchse 41 auf. Dadurch liegt der Kragen 8 optimal auf der Gleitlagerbuchse 41 auf, ohne bei der Ausrichtung des Schwenkarmes 2 zu stören. In alternativen Ausführungsformen der Ausrichtvorrichtung 1 kann der Kragen 8 jedoch auch eine andere Form und/oder andere Abmessungen aufweisen. Beispielsweise kann der Kragen 8 in einer Draufsicht mehreckig ausgebildet sein.

In axialer Ausrichtung des Kolbens 42 erstreckt sich von dem Kragen 8 ein Verbindungselement 7, über welches der Kolben 42 mit dem Schwenkarm 2 verbunden wird bzw. ist.

In der gezeigten Ausführungsform ist das Verbindungselement 7, wie beispielsweise in Figur 1 gezeigt, halbzylinderförmig ausgebildet. An einer flachen Seite 71 des Halbzylinders ist der Schwenkarm 2 befestigt.

Das Verbindungselement 7 ist gelenkig mit dem Schwenkarm 2 verbunden. An der gelenkigen Verbindung 5 zwischen dem Schwenkarm 2 und der Drehlagervorrichtung 40, speziell dem Verbindungselement 7, ist eine Feststelleinrichtung 6 ausgebildet.

Die Feststelleinrichtung 6 weist bei der Ausrichtvorrichtung 1 eine Feststellschraube 61 auf. Durch die Feststellschraube 61 wird ein von dem Zwei- oder Dreiradfahrzeug wegzeigender Endbereich 71 des Verbindungselementes 7 mit einem zu dem Zwei- oder Dreiradfahrzeug hinzeigenden Endbereich 211 des Schwenkarmes 2 verbunden.

Durch Lockern der Feststellschraube 61 ist der Schwenkarm 2 gegenüber dem in der Gleitlagerbuchse 41 eingebrachten Kolben 42 verschwenkbar, wodurch der an dem Schwenkarm 2 angebrachte Laser 3 auf ein auszurichtendes Anbauteil, beispielsweise einen Bremshebel, des Zwei- oder Dreiradfahrzeuges ausgerichtet werden kann. Durch Festziehen der Feststellschraube 61 kann die Position des Schwenkarmes 2 fixiert werden. Wird dann der Schwenkarm 2 mittels der Drehlagervorrichtung 40 verdreht, kann die Lage und Neigung eines ersten auszurichtenden Anbauteils, z. B. eines ersten Bremshebels, auf ein symmetrisch zu dem ersten Anbauteil auszurichtendes zweites Anbauteil, wie einen zweiten Bremshebel, an dem Zwei- oder Dreiradfahrzeug übertragen werden.

Bei der beispielhaft gezeigten Ausrichtvorrichtung 1 ist der Schwenkarm 2 zweigliedrig ausgebildet. Der Schwenkarm 2 weist einen Ausrichtarm 21 und einen gelenkig mit dem Ausrichtarm 21 verbundenen Laserhaltearm 22 auf.

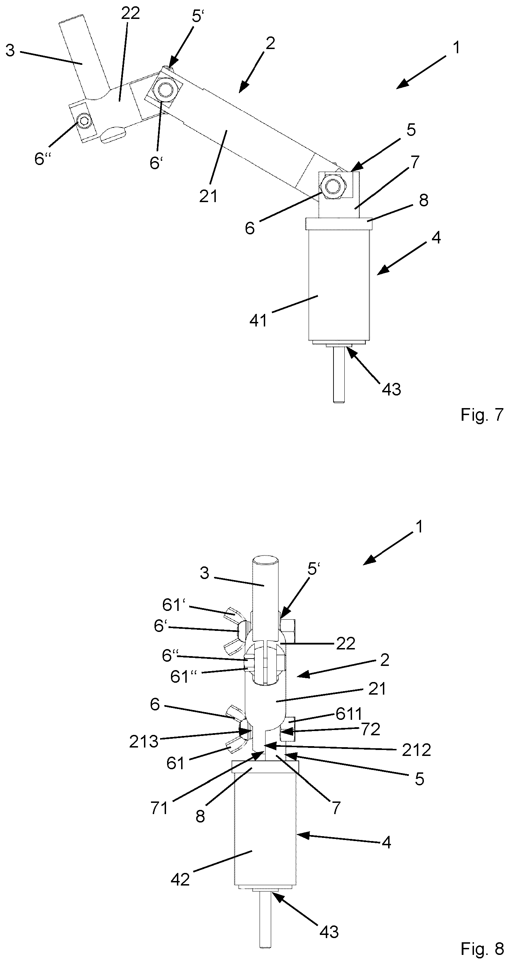

Wie es besonders gut in Figur 8 zu sehen ist, ist der Ausrichtarm 21 mit dem Verbindungselement 7 verbunden. Ein mit dem Verbindungselement 7 zu verbindender Endbereich des Ausrichtarmes 21, welcher dem Endbereich 211 des Schwenkarmes 2 entspricht, ist beidseitig abgeflacht ausgebildet.

Der mit dem Verbindungselement 7 zu verbindende Endbereich des Ausrichtarmes 21 kann, insbesondere bei einer anderen Ausgestaltung des Verbindungselementes 7, auch anders ausgestaltet sein. Beispielsweise kann der Endbereich des Ausrichtarmes 21 nur einseitig abgeflacht und/oder geschlitzt ausgebildet sein.

Bei der gezeigten Ausführungsform der Ausrichtvorrichtung 1 sind die Abflachungen 212, 213 des Ausrichtarmes 21 einander gegenüberliegend angeordnet. Die Feststellschraube 61 verläuft durch eine in dem Bereich der Abflachungen 212, 213 eingebrachte Durchgangsöffnung. Speziell durch die im verbundenen Zustand von Ausrichtarm 21 und Verbindungselement 7 nicht an dem Verbindungselement 7 anliegenden Abflachung 213 kann die Feststellschraube 61 einfach und fest in die Durchgangsöffnung eingebracht werden.

Bei der gezeigten Ausrichtvorrichtung 1 ist die Feststellschraube 61 eine Flügelschraube, welche mit einer Schraubenmutter 611 fixiert ist. Um die Schraubenmutter 611 gut befestigen zu können und ein gutes Anliegen der Schraubenmutter 611 an dem Verbindungselement 7 zu gewährleisten, weist das Verbindungselement 7 eine der flachen Seite 71 des Verbindungselementes 7 gegenüberliegende, sich nicht über die gesamte Länge des Verbindungselementes 7 erstreckende Abflachung 72 auf.

In weiteren Ausführungsformen der Ausrichtvorrichtung 1 kann anstatt einer Flügelschraube auch eine Sternkopfschraube oder eine anders ausgebildete Feststellschraube verwendet werden. Es ist auch denkbar, dass die Feststelleinrichtung 6 anstelle einer klassischen Schraubenverbindung eine Schnellspannvorrichtung oder einen anders ausgebildeten Feststellmechanismus aufweist.

Der Ausrichtarm 21 ist bei der gezeigten Ausführungsform zylinderförmig ausgebildet, wobei ein zweiter Endbereich 214 des Ausrichtarmes 21, welcher dem ersten Endbereich 211 des Ausrichtarmes 21 gegenüberliegend angeordnet ist, durch eine gelenkige Verbindung 5' mit dem Laserhaltearm 22 verbunden ist.

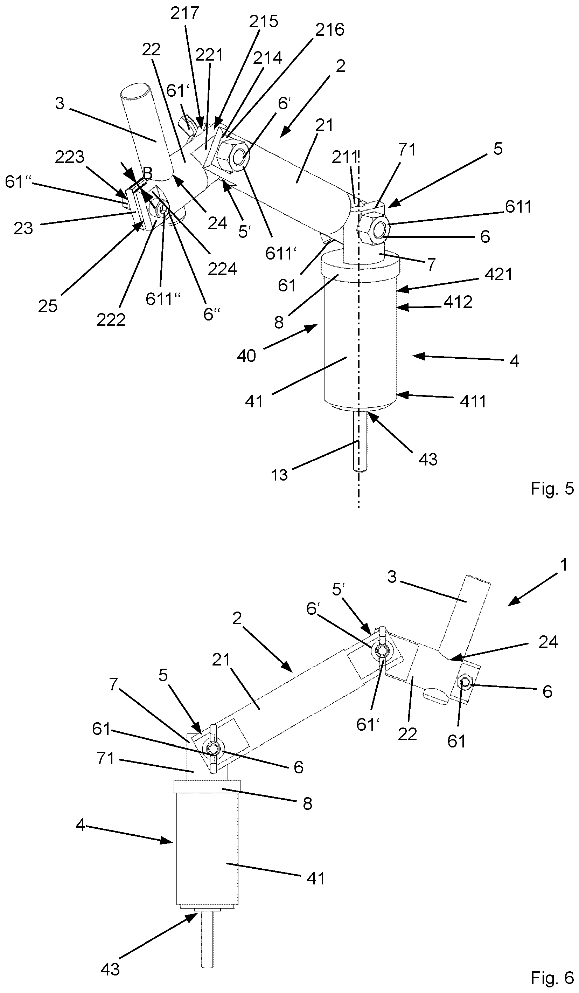

Der Laserhaltearm 22 ist bei der gezeigten Ausführungsform zylinderförmig ausgebildet. Für eine optimale Verbindung des Ausrichtarmes 21 mit dem Laserhaltearm 22 ist der Ausrichtarm 21, wie in Figur 6 gezeigt, an seiner gelenkigen Verbindung 5' mit dem Laserhaltearm 22 geschlitzt ausgebildet, während der Laserhaltearm 22 an der gelenkigen Verbindung 5' beidseitig abgeflacht ausgebildet ist. Hierdurch kann der Laserhaltearm 22 durch Einstecken eines abgeflachten Endbereiches 221 des Laserhaltearmes 22 in einen Einsteckschlitz 215 des Ausrichtarmes 21 an dem Ausrichtarm 21 angebracht werden.

Wie es beispielsweise in Figur 5 gezeigt ist, ist der Einsteckschlitz 215 mittig in eine Grundfläche des Ausrichtarmes 21 eingebracht. Der Endbereich 221 des Laserhaltearmes 3 ist derart beidseitig abgeflacht, dass dieser passgenau in den Einsteckschlitz 215 einbringbar ist.

An der gelenkigen Verbindung 5' zwischen dem Laserhaltearm 22 und dem Ausrichtarm 21 ist zum Ermöglichen einer Schwenkbewegung des Laserhaltearmes 22 gegenüber dem Ausrichtarm 21 und zum gleichzeitigen Fixieren des Laserhaltearmes 22 in einer gewünschten Stellung eine Feststelleinrichtung 6' angeordnet.

Die Feststelleinrichtung 6' weist bei der gezeigten Ausrichtvorrichtung 1 eine Feststellschraube 61' auf. Die Feststellschraube 61' ist durch eine quer zu dem Einsteckschlitz 215 verlaufende, im Verbindungsbereich des Ausrichtarmes 21 mit dem Laserhaltearm 22 angeordnete Durchgangsöffnung geführt. Die Feststellschraube 61' ist vorliegend eine Flügelschraube, welche mittels einer Schraubenmutter 611' fixiert ist.

In der gezeigten Ausführungsform weist der Endbereich 214 des Ausrichtarmes 21 beidseitige Abflachungen 216, 217 auf. Die Abflachungen 216, 217 verlaufen parallel zu dem Einsteckschlitz 215.

Der zylinderförmig ausgebildete Laserhaltearm 22 weist einen zweiten Endbereich 222 auf, der dem ersten Endbereich 221, welcher mit dem Ausrichtarm 21 verbunden ist, gegenüberliegend angeordnet ist.

An dem zweiten Endbereich 222 weist der Laserhaltearm 22 eine Aufnahmeöffnung 24 für den Laser 3 auf. Die Aufnahmeöffnung 24 ist in ihrer Form und Größe an einen Umfang des Lasers 3 angepasst.

Bei der gezeigten Ausrichtvorrichtung 1 ist die Aufnahmeöffnung 24 als Durchgangsöffnung mit rundem Querschnitt ausgebildet. In anderen Ausführungsformen der erfindungsgemäßen Ausrichtvorrichtung kann die Aufnahmeöffnung 24 auch einen anderen Querschnitt, beispielsweise einen ovalen, rechteckigen oder dreieckigen Querschnitt, aufweisen. Auch muss die Aufnahmeöffnung 24 nicht als Durchgangsöffnung ausgebildet sein. Ebenso kann die Aufnahmeöffnung 24 auch eine Sacklochbohrung sein, in welche der Laser 3 eingesteckt wird.

Für ein leichteres Einbringen des Lasers 3 in die Aufnahmeöffnung 24 und ein sicheres Halten des Lasers 3 in der Aufnahmeöffnung 24 ist an der Aufnahmeöffnung 24 ein Einführhilfeschlitz 25 angeordnet. Der Einführhilfeschlitz 25 erstreckt sich in Längsrichtung des Laserhaltearmes 22 von einem freien Ende 23 des Laserhaltearmes 22 bis zu der Aufnahmeöffnung 24.

Durch den Einführhilfeschlitz 25 ist die Aufnahmeöffnung 24 aufspreizbar, wodurch der Laser 3 einfach in den Aufnahmeöffnung 24 eingeführt werden kann. Zugleich kann durch eine Verringerung einer Breite B des Einführhilfeschlitzes 25 die Aufnahmeöffnung 24 in ihrem Durchmesser verringert werden, wodurch der in der Aufnahmeöffnung 24 eingebrachte Laser 3 in der Aufnahmeöffnung 24 fixiert werden kann. Die Verringerung der Breite B des Einführhilfeschlitzes 25 wird bei der gezeigten Ausführungsform der Ausrichtvorrichtung 1 durch eine daran angeordnete Feststelleinrichtung 6" ermöglicht.

Die Feststelleinrichtung 6" weist eine quer zu dem Einführhilfeschlitz 25 angeordnete Feststellschraube 61" auf. Durch Lösen oder Festziehen der Feststellschraube 61" ist die Breite B des Einführhilfeschlitzes 25 und damit auch der Durchmesser der Aufnahmeöffnung 24 variierbar.

Bei der gezeigten Ausrichtvorrichtung 1 ist die Feststellschraube 61" eine Sechskantschraube, welche mit einer Schraubenmutter 611" fixiert ist.

Für eine optimale Befestigung der Feststellschraube 61" an dem Laserhaltearm 22 weist auch der Endbereich 222 des Laserhaltearmes 22 zwei sich gegenüberliegend angeordnete Abflachungen 223, 224 auf. Die Abflachungen 223, 224 verlaufen parallel zu dem Einführhilfeschlitz 25.

In der Ausrichtvorrichtung 1 ist der Ausrichtarm 21 ca. doppelt so lang wie der Laserhaltearm 22. In alternativen Ausführungsformen der erfindungsgemäßen Ausrichtvorrichtung können der Ausrichtarm 21 und der Laserhaltearm 22 auch ein anderes Längenverhältnis zueinander aufweisen. Beispielsweise können der Laserhaltearm 22 und der Ausrichtarm 21 gleichlang ausgebildet sein oder der Ausrichtarm 21 ist im Vergleich zu dem Laserhaltearm 22 um ein Vielfaches länger als der Laserhaltearm 22. Auch kann der Laserhaltearm 22 länger als der Ausrichtarm 21 sein.

Bei der gezeigten Ausführungsform ist der Laser 3 ein Punktlaser. Es kann jedoch stattdessen auch ein anderer Laser 3, beispielsweise ein Linienlaser, verwendet werden.

In Figur 9 ist die Ausrichtvorrichtung 1 an einem Fahrrad 14 angebracht.

Die Ausrichtvorrichtung 1 ist dabei durch Verschrauben der Gleitlagerbuchse 41 mit dem Fahrzeuggabelschaft 12 des Fahrrades 14 an dem Fahrrad 14 befestigt. In anderen Ausführungsformen der erfindungsgemäßen Ausrichtvorrichtung kann diese auch anders oder an einer anderen Stelle an einem Zwei- oder Dreiradfahrzeug, wie einem Fahrrad 14, befestigt sein. So kann die Ausrichtvorrichtung beispielsweise mit einer ein Klemmelement aufweisenden Fahrzeugkopplung 4 an einem Rahmenteil des Zwei- oder Dreiradfahrzeuges befestigt sein.

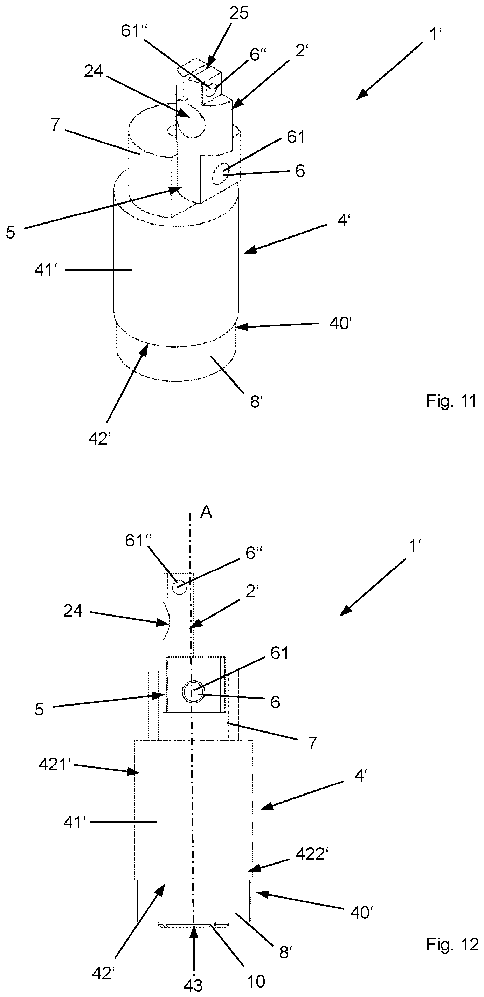

Die Figuren 10 bis 12 zeigen schematisch eine weitere Ausführungsform einer erfindungsgemäßen Ausrichtvorrichtung 1' in unterschiedlichen Ansichten, wobei gleiche Bezugszeichen wie in den Figuren 1 bis 9 gleiche Merkmale bezeichnen. Die obige Beschreibung, die hinsichtlich dieser Merkmale erfolgt ist, gilt auch für die entsprechenden Merkmale in den Figuren 10 bis 12.

Bei der Ausrichtvorrichtung 1' weist - wie die Ausrichtvorrichtung 1 - eine Fahrzeugkopplung 4' mit einer Gleitlagerbuchse 41' und einem Kolben 42' auf, die zusammen eine Drehlagervorrichtung 40' bilden. Anders als bei der Ausrichtvorrichtung 1 wird jedoch bei der Ausrichtvorrichtung 1' nicht die Gleitlagerbuchse 41', sondern der Kolben 42' der Fahrzeugkopplung 4' mit dem Zwei- oder Dreiradfahrzeug verbunden.

Der Kolben 42' wird beispielsweise an einem Fahrzeuggabelschaft 12 eines Zwei- oder Dreiradfahrzeuges, wie eines Fahrrades 14, befestigt.

Der Kolben 42' wird bei der gezeigten Ausführungsform mittels eines Spannelementes 10 an den Fahrzeuggabelschaft 12 des Zwei- oder Dreiradfahrzeuges geklemmt. Das Spannelement 10 ist fahrzeugseitig an einem zu dem Zwei- oder Dreiradfahrzeug ausgerichteten Ende 422' des Kolbens 42' vorgesehen. Das Spannelement 10 ist ein getrennt von dem Kolben 42' ausgebildetes Bauteil, welches in eine an einem Endbereich 422' des Kolbens 42' ausgebildete Aufnahme 9 eingebracht ist.

Das Spannelement 10 ist ringförmig ausgebildet. Zum Klemmen des Spannelementes 10 in einer Öffnung des Fahrzeuggabelschaftes 12 weist das Spannelement 10 spreizbare Spannbacken 11 auf. In der gezeigten Ausführungsform weist das Spannelement 10 vier Spannbacken 11 auf. In anderen Ausführungsformen der Ausrichtvorrichtung 1' kann das Spannelement 10 auch eine andere Anzahl an Spannbacken 11, beispielsweise drei Spannbacken 11, aufweisen.

Die Spannbacken 11 sind bei der gezeigten Ausführungsform jeweils in Form eines Ringsegmentes ausgebildet, wobei die einzelnen Ringsegmente des Spannelementes 10 im ungespreizten Zustand zusammen einen Ring ausbilden.

Zum Aufspreizen der Spannbacken 11 und damit zum Klemmen des Spannelementes 10 an dem Fahrzeuggabelschaft 12 wird mittig des durch die ringsegmentartig ausgebildeten Spannbacken 11 ausgebildeten Ringes ein zumindest teilweise kegelförmiges Befestigungselement eingeführt. Durch die Kegelform des Befestigungselementes werden die Spannbacken 11 auseinandergeschoben, wodurch das Spannelement 10 in einer Öffnung des Fahrzeuggabelschaftes 12 geklemmt wird.

Zum Einbringen des Befestigungselementes in das ringförmig ausgebildete, an dem Ende 422' des Kolbens 42' angebrachte Spannelement 10 weist der Kolben 42' eine in axialer Richtung des Kolbens 42' verlaufende Durchgangsöffnung auf.

Wie bei der Fahrzeugkopplung 4 der Ausrichtvorrichtung 1 ist auch bei der Fahrzeugkopplung 4' der Ausrichtvorrichtung 1' der Kolben 42' getrennt von der Gleitlagerbuchse 41' ausgebildet. So kann der Kolben 42' zunächst problemlos mit dem Zwei- oder Dreiradfahrzeug verbunden werden, bevor die Gleitlagerbuchse 41' auf den Kolben 42' aufgesetzt wird.

Die Gleitlagerbuchse 41' ist in Form eines Hohlzylinders ausgebildet, der ein fahrzeugseitig offenes Ende aufweist, sodass die Gleitlagerbuchse 41' gleitend auf den Kolben 42' aufgesteckt werden kann.

Der Kolben 42' ist in seiner Form und Größe an eine Innenform und -größe der Gleitlagerbuchse 41' angepasst, sodass die Gleitlagerbuchse 41'auf den Kolben 42' aufgesteckt und um eine Längsachse A des Kolbens 42' rotierbar ist.

Der Kolben 42' weist, ähnlich wie der Kolben 42 der Ausrichtvorrichtung 1, einen Kragen 8' auf.

Der Kragen 8' ist ringförmig ausgebildet und weist einen gleichen oder geringfügig größeren Außendurchmesser wie/als die Gleitlagerbuchse 41' auf.

In dem Kragen 8' ist die Aufnahme 9 zum Aufnehmen des Spannelementes 10 eingebracht.

Die Gleitlagerbuchse 41' weist an ihrem von dem Zwei- oder Dreiradfahrzeug wegweisenden Ende 421' ein Verbindungselement 7 auf. Das Verbindungselement 7 ist halbzylinderförmig ausgebildet und dient dem Verbinden der Fahrzeugkopplung 4, speziell dem Kolben 42', mit einem Schwenkarm 2'.

Durch eine Feststelleinrichtung 6, die eine Feststellschraube 61 aufweist, ist die Fahrzeugkopplung 4 gelenkig mit dem Schwenkarm 2' verbunden.

Bei der Ausrichtvorrichtung 1' ist der Schwenkarm 2' eingliedrig ausgebildet. Der Schwenkarm 2' weist damit, anders als der Schwenkarm 2 der Ausrichtvorrichtung 1, keinen Ausrichtarm 21 und keinen Laserhaltearm 22 auf.

In anderen Ausführungsformen der Erfindung kann der Schwenkarm 2' auch mehrgliedrig, beispielsweise zwei- oder dreigliedrig, ausgebildet sein.

Der Schwenkarm 2' ist vorliegend zylinderförmig ausgebildet. An seinem ersten, mit dem Verbindungselement 7 verbundenen Ende ist der Schwenkarm 2' zum besseren Verbinden mit dem Verbindungselement 7 beidseitig abgeflacht.

An seinem freien Ende, welches dem ersten Ende gegenüberliegt, weist der Schwenkarm 2' eine Aufnahmeöffnung 24 zur Aufnahme eines in den Figuren 10 bis 12 nicht gezeigten Lasers 3 auf.

Für ein leichtes Einführen des Lasers 3 in die Aufnahmeöffnung 24 und ein sicheres Halten des Lasers 3 in der Aufnahmeöffnung 24 mündet in die Aufnahmeöffnung 24 ein Einführhilfeschlitz 25, dessen Breite durch eine durch den Einführhilfeschlitz 25 verlaufende Feststellschraube 61" verstellbar ist. Durch das Verstellen der Breite des Einführhilfeschlitzes 25 wird zugleich ein Durchmesser der mit dem Einführhilfeschlitz 25 verbundenen Aufnahmeöffnung 24 verändert.

## Patentansprüche

1. Ausrichtvorrichtung (1, 1') für ein Zwei- oder Dreiradfahrzeug, wobei die Ausrichtvorrichtung (1, 1') einen Schwenkarm (2, 2') mit einem daran befestigten Laser (3) und eine Fahrzeugkopplung (4, 4') aufweist, **dadurch gekennzeichnet, dass** die Fahrzeugkopplung (4, 4') eine fest mit dem Zwei- oder Dreiradfahrzeug verbindbare Drehlagervorrichtung (40, 40') aufweist, wobei der Schwenkarm (2, 2') mit der Drehlagervorrichtung (40, 40') gelenkig verbunden ist und an der gelenkigen Verbindung (5) zwischen dem Schwenkarm (2, 2') und der Drehlagervorrichtung (40, 40') eine Feststelleinrichtung (6) ausgebildet ist.

2. Ausrichtvorrichtung nach Anspruch 1, **dadurch gekennzeichnet, dass** die Drehlagervorrichtung (40, 40') ein Gleitlager mit einer Gleitlagerbuchse (41, 41') und einem in die Gleitlagerbuchse (41, 41') passenden Kolben (42, 42') ist, wobei die Gleitlagerbuchse (41, 41') und der Kolben (42, 42') relativ zueinander verdrehbar sind.

3. Ausrichtvorrichtung nach einem der vorhergehenden Ansprüche, **dadurch gekennzeichnet, dass** der Schwenkarm (2) einen Ausrichtarm (21) und einen mit dem Ausrichtarm (21) gelenkig verbundenen Laserhaltearm (22) aufweist, wobei an der gelenkigen Verbindung (5') zwischen dem Ausrichtarm (21) und dem Laserhaltearm (22) eine Feststelleinrichtung (6') ausgebildet ist.

4. Ausrichtvorrichtung nach Anspruch 2 oder 3, **dadurch gekennzeichnet, dass** die Gleitlagerbuchse (41, 41') oder der Kolben (42, 42') fahrzeugseitig ein Gewinde (43) aufweist.

5. Ausrichtvorrichtung nach Anspruch 2 oder 3, **dadurch gekennzeichnet, dass** fahrzeugseitig an dem Kolben (42, 42') oder der Gleitlagerbuchse (41, 41') eine Aufnahme (9) ausgebildet ist, in die ein Spannelement (10) mit spreizbaren Spannbacken (11) eingreift.

6. Ausrichtvorrichtung nach einem der Ansprüche 2 bis 5, **dadurch gekennzeichnet, dass** der Kolben (42, 42') einen Kragen (8) aufweist, der auf die Gleitlagerbuchse (41, 41') aufsetzbar ist oder aufsitzt.

7. Ausrichtvorrichtung nach einem der vorhergehenden Ansprüche, **dadurch gekennzeichnet, dass** die Fahrzeugkopplung (4) an der gelenkigen Verbindung (5) zwischen der Drehlagervorrichtung (40) und dem Schwenkarm (2, 2') ein Verbindungselement (7) aufweist, wobei entweder das Verbindungselement (7) geschlitzt und der Schwenkarm (2, 2') beidseitig abgeflacht ist oder der Schwenkarm (2, 2') geschlitzt und das Verbindungselement (7) beidseitig abgeflacht ist und/oder an der gelenkigen Verbindung (5') zwischen dem Ausrichtarm (21) und dem Laserhaltearm (22) entweder der Ausrichtarm (21) geschlitzt und der Laserhaltearm (22) beidseitig abgeflacht ist oder der Laserhaltearm (22) geschlitzt und der Ausrichtarm (21) beidseitig abgeflacht ist.

8. Ausrichtvorrichtung nach einem der vorhergehenden Ansprüche, **dadurch gekennzeichnet, dass** der Schwenkarm (2, 2') an seinem freien Ende (23) einen in eine Aufnahmeöffnung (24) für den Laser (3) mündenden Einführhilfeschlitz (25) aufweist.

9. Ausrichtvorrichtung nach Anspruch 8, **dadurch gekennzeichnet, dass** an dem Einführhilfeschlitz (25) eine Feststelleinrichtung (6") ausgebildet ist.

10. Ausrichtvorrichtung nach einem der vorhergehenden Ansprüche, **dadurch gekennzeichnet, dass** die jeweilige Feststelleinrichtung (6, 6', 6") eine Feststellschraube (61, 61', 61") aufweist.

## Claims

1. Alignment device (1, 1') for a two- or three-wheeled vehicle, wherein the alignment device (1, 1') comprises a pivot arm (2, 2') with a laser (3) attached thereto, and a vehicle coupling (4, 4'), **characterized in that** the vehicle coupling (4, 4') comprises a pivot bearing device (40, 40') which can be fixedly connected to the two- or three-wheeled vehicle, wherein the pivot arm (2, 2') is hingedly connected to the pivot bearing device (40, 40'), and wherein a locking device (6) is formed at the hinged connection (5) between the pivot arm (2, 2') and the pivot bearing device (40, 40').

2. Alignment device according to claim 1, **characterized in that** the pivot bearing device (40, 40') is a plain bearing comprising a plain bearing bushing (41, 41') and a piston (42, 42') fitting into the plain bearing bushing (41, 41'), wherein the plain bearing bushing (41, 41') and the piston (42, 42') are rotatable relative to one another.

3. Alignment device according to one of the preceding claims, **characterized in that** the pivot arm (2) comprises an alignment arm (21) and a laser holding arm (22) hingedly connected to the alignment arm (21), wherein a locking device (6') is formed at the hinged connection (5') between the alignment arm (21) and the laser holding arm (22).

4. Alignment device according to claim 2 or 3, **characterized in that** the plain bearing bushing (41, 41') or the piston (42, 42') comprises a thread (43) on the vehicle side.

5. Alignment device according to claim 2 or 3, **characterized in that** a receptacle (9) is formed at the piston (42, 42') or at the plain bearing bushing (41, 41') on the vehicle side, into which receptacle (9) a clamping element (10) with expandable clamping jaws (11) engages.

6. Alignment device according to one of claims 2 to 5, **characterized in that** the piston (42, 42') comprises a collar (8) which can be placed onto or rests on the plain bearing bushing (41, 41').

7. Alignment device according to one of the preceding claims, **characterized in that** the vehicle coupling (4) comprises a connecting element (7) at the hinged connection (5) between the pivot bearing device (40) and the pivot arm (2, 2'), wherein either the connecting element (7) is slotted and the pivot arm (2, 2') is flattened on both sides, or the pivot arm (2, 2') is slotted and the connecting element (7) is flattened on both sides, and/or either the alignment arm (21) is slotted and the laser holding arm (22) is flattened on both sides, or the laser holding arm (22) is slotted and the alignment arm (21) is flattened on both sides at the hinged connection (5') between the alignment arm (21) and the laser holding arm (22).

8. Alignment device according to one of the preceding claims, **characterized in that,** at its free end (23), the pivot arm (2, 2') comprises an insertion aid slot (25) opening into a receiving opening (24) for the laser (3).

9. Alignment device according to claim 8, **characterized in that** a locking device (6") is formed at the insertion aid slot (25).

10. Alignment device according to one of the preceding claims, **characterized in that** the respective locking device (6, 6', 6") comprises a locking screw (61, 61', 61").

## Revendications

1. Dispositif d'alignement (1, 1') pour un véhicule à deux ou trois roues, le dispositif d'alignement (1, 1') comprenant un bras pivotant (2, 2') auquel un laser (3) est attaché, et un coupleur de véhicule (4, 4'), **caractérisé en ce que** le coupleur de véhicule (4, 4') comprend un dispositif de palier pivotant (40, 40') qui peut être fixé au véhicule à deux ou trois roues, le bras pivotant (2, 2') étant connecté de manière articulée au dispositif de palier pivotant (40, 40'), et un dispositif de verrouillage (6) étant formé sur la connexion articulée (5) entre le bras pivotant (2, 2') et le dispositif de palier pivotant (40, 40').

2. Dispositif d'alignement selon la revendication 1, **caractérisé en ce que** le dispositif de palier pivotant (40, 40') est un palier lisse comprenant une douille de palier lisse (41, 41') et un piston (42, 42') s'insérant dans la douille de palier lisse (41, 41'), la douille de palier lisse (41, 41') et le piston (42, 42') étant rotatifs l'un par rapport à l'autre.

3. Dispositif d'alignement selon l'une des revendications précédentes, **caractérisé en ce que** le bras pivotant (2) comprend un bras d'alignement (21) et un bras de support de laser (22) connecté de manière articulée au bras d'alignement (21), un dispositif de verrouillage (6') étant formé sur la connexion articulée (5') entre le bras d'alignement (21) et le bras de support de laser (22).

4. Dispositif d'alignement selon la revendication 2 ou 3, **caractérisé en ce que** la douille de palier lisse (41, 41') et le piston (42, 42') comprend un filetage (43) au côté véhicule.

5. Dispositif d'alignement selon la revendication 2 ou 3, **caractérisé en ce que** un raccord (9) est formé sur le (42, 42') ou sur la douille de palier lisse (41, 41') au côté véhicule, dans quel raccord (9) s'engage un élément de serrage (10) avec des mâchoires de serrage extensibles (11).

6. Dispositif d'alignement selon l'une des revendications 2 à 5, **caractérisé en ce que** le piston (42, 42') comprend une manchette (8) qui peut être ou est placé sur la douille de palier lisse (41, 41').

7. Dispositif d'alignement selon l'une des revendications précédentes, **caractérisé en ce que** le coupleur de véhicule (4) comprend un élément de connexion (7) sur la connexion articulée (5) entre le dispositif de palier pivotant (40) et le bras pivotant (2, 2'), soit l'élément de connexion (7) étant rainuré et le bras pivotant (2, 2') est aplati des deux côtés, soit le bras pivotant (2, 2') est rainuré et l'élément de connexion (7) est aplati des deux côtés et/ou, soit le bras d'alignement (21) est rainuré et le bras de support de laser (22) est aplati des deux côtés, soit le bras de support de laser (22) est rainuré et le bras d'alignement (21) est aplati des deux côtés sur la connexion articulée (5') entre le bras d'alignement (21) et le bras de support de laser (22).

8. Dispositif d'alignement selon l'une des revendications précédentes, **caractérisé en ce que,** à son extrémité libre (23), le bras pivotant (2, 2') comprend une rainure d'aide d'insertion (25) s'ouvrant dans une ouverture de réception (24) pour le laser (3).

9. Dispositif d'alignement selon la revendication 8, **caractérisé en ce que** un dispositif de verrouillage (6") est formé sur la rainure d'aide d'insertion (25).

10. Dispositif d'alignement selon l'une des revendications précédentes, **caractérisé en ce que** dispositif de verrouillage (6, 6', 6") respectif comprend un vis de verrouillage (61, 61', 61").
